## Europäisches Patentamt
## European Patent Office
## Office européen des brevets

(19)

(11) Veröffentlichungsnummer: **0 104 637**
**B1**

(12) **EUROPÄISCHE PATENTSCHRIFT**

(45) Veröffentlichungstag der Patentschrift:
**03.02.88**

(21) Anmeldenummer: **83109572.4**

(22) Anmeldetag: **26.09.83**

(51) Int. Cl.⁴: **H 04 M 3/36,** H 04 M 7/06, H 04 Q 3/54

(54) Schaltungsanordnung für Fernmeldeanlagen, insbesondere Fernsprechvermittlungsanlagen mit zentralen Informationsverarbeitungseinrichtungen mit Überlastsignalaussendung.

(30) Priorität: **29.09.82 DE 3236130**

(43) Veröffentlichungstag der Anmeldung:
**04.04.84 Patentblatt 84/14**

(45) Bekanntmachung des Hinweises auf die Patenterteilung:
**03.02.88 Patentblatt 88/5**

(84) Benannte Vertragsstaaten:
**CH FR GB LI SE**

(56) Entgegenhaltungen:
**US-A-4 099 235**

**PATENTS ABSTRACTS OF JAPAN, Band 6, Nr. 132 (E-119)(1010), 17. Juli 1982; & JP - A - 5758453 FOURTH INTERNATIONAL CONFERENCE ON SOFTWARE ENGINEERING FOR TELECOMMUNICATION SWITCHING SYSTEMS", 20-24 Juli 1981, Seiten 167-171, Coventry, GB; C. HARVEY et al.: "Controlling overloads in multiprocessor systems"
ELECTRONIC SWITCHING, GRINSEC, 1983, Seiten 411-415, Elsevier, Amsterdam, NL; Ein Übersetzung von "La commutation electronique" 1981, Teil IV "Call processing", Kapitel 1, Absatz 8, "Traffic supervision and load control"
IEEE TRANSACTIONS ON COMMUNICATIONS, Band COM-30, Nr. 6, Juni 1982, Seiten 1369-1378, New York, US; B.K. PENNEY et al.: "The software**

(73) Patentinhaber: **Siemens Aktiengesellschaft Berlin und München, Wittelsbacherplatz 2, D-8000 München 2 (DE)**

(72) Erfinder: **Pusch, Hildegard, Alfred- Kubin- Weg 18, D-8000 München 71 (DE)**

(56) Entgegenhaltungen: (Fortsetzung)
**architecture for a large telephone switch"
NINTH INTERNATIONAL TELETRAFFIC CONGRESS (ITC), Oktober 1979, Paper ITC-9, Seiten 1-7, Torremolinos, ES; P. SOMOZA et al: "Dynamic processor overload control and its implementation in certain single-processor and multiprocessor SPC systems"
TELCOM REPORT, Band 4, 1981, Beiheft "Digitalvermittlungssystem EWSD", Seiten 38-43, München, DE; G. WENZEL: "Der zentrale Zeichenkanal Nr. 7 nach CCITT im System EWSD"
CCITT-Beitrag DELAYED CONTRIBUTION X (Arbeitsgruppe XI/2, Genf, Out. 1981**

## Beschreibung

Die Erfindung betrifft eine Schaltungsanordnung für Fernmeldeanlagen, insbesondere Fernsprechvermittlungsanlagen, mit zentralen Informationsverarbeitungseinrichtungen und ihnen zugeordneten teilzentralen Schalteinrichtungen, die Informationen, insbesondere Steuerinformationen, an eine ihnen jeweils zugeordnete Informationsverarbeitungseinrichtung abgeben, die dann, wenn die Menge der laufend erhaltenen Informationen eine obere Grenze ihrer Verarbeitungskapazität erreicht oder übersteigt, in regelmäßigen Zeitabständen ein Überlastsignal zu den betreffenden Schalteinrichtungen aussendet, in denen jeweils ein die empfangenen Überlastsignale aufsummierender und hierzu durch die Überlastsignale schrittweise weitergeschalteter und nach Verlauf von gegenüber den Zeitabständen größeren und ebenfalls regelmäßig aufeinanderfolgenden Zeitintervallen jeweils schrittweise zurückgeschalteter Zähler vorgesehen ist, und in denen pro Schalteinrichtung individuell jeweils ein Zählerstandswert gespeichert ist, bei dessen Erreichen oder Überschreiten die Abgabe von Informationen von der betreffenden teilzentralen Schalteinrichtung in dieser solange unterbunden ist, bis durch Zurückschalten des Zählers dessen Zählerstand den gespeicherten Zählerstandswert wieder unterschreitet oder erreicht.

Eine Schaltungsanordnung dieser Art ist bereits bekannt durch den CCITT-Beitrag DELAYED CONTRIBUTION X (Arbeitsgruppe XI/2, Genf, Okt. 1981)

Eine Schaltungsanordnung der bekannten Art dient z. B. dem Zweck einer Abwehr von Überlast in einem zentralen Zeichengabenetz. Ein solches Zeichengabenetz möge jeweils eine zentrale Kanalsteuerung an jedem der mehreren Netzknoten aufweisen. Eine Kanalsteuerung möge der Zeichengabe über eine Mehrzahl von Zeichengabekanälen dienen, die von dem betreffenden Netzknoten in verschiedene Richtungen führen. Das Zeichengabenetz möge einer Übertragung vcn Signalisierungszeichen dienen, die mit unterschiedlichen Dringlichkeiten zu übertragen sind. Demgemäß sind die Signalisierungszeichen verschiedener Arten unterschiedlichen Dringlichkeitsstufen zugeordnet. Signalisierungszeichen einer niedrigen Dringlichkeitsstufe mögen z. B. Zählerstandswerte von Gebührenimpulszählern und Betriebsdaten ähnlicher Art sein. Signalisierungszeichen einer höheren Dringlichkeitsstufe mögen z. B. Verbindungsherstellungsdaten zur Herstellung von Datenübertragungsverbindungen sein. Signalisierungszeichen einer noch höheren Dringlichkeitsstufe mögen z. B. Verbindungsherstellungsdaten für Fernsprechfernverbindungen sein. Signalisierungszeichen noch höherer Dringlichkeits stufen mögen z. B. zur Übertragung von Störungsmeldungen, von Katastrophenalarmen und dergleichen sein. Eine Abstufung der verschiedenen Dringlichkeiten kann sich gänzlich daraus ergeben, von welcher jeweiligen besonderen Art von teil zentralen Schalteinrichtungen die unterschiedlich dringlichen zu übertragenden Signalisierugszeichen stammen.

Die bekannte Anordnung gibt nun die Möglichkeit, bei einem Ansteigen der Belastung für eine Kanalsteuerung oder für einzelne der jeweils mit ihr verbundene Zeichengabekanäle eine Überlast graduell gestuft abzuwehren. Eine Überlast des Zeichengabesystems könnte zu einer Blockierung oder zu einer Nachrichtenverfälschung führen. Der von jedem der Zähler in jeder der genannten Schalteinrichtungen tatsächlich erreichte Zählerstand gibt nun den jeweiligen Grad der Überlast an. Eine Überlastabwehr möge z. B. bereits eingeleitet werden, wenn die Belastung 75 % der Verarbeitungskapazität der Kanalsteuerung oder der Verarbeitungskapazität der einzelnen Zeichengabekanäle, also ihrer Übertragungskapazität, erreicht und übersteigt. Bei diesem Belastungsgrad möge z. B. jegliche Übertragung von Zählerstandswerten von Gebührenimpulszählern unterbunden werden. Bei einem höheren Belastungsgrad von z. B. 90 % und darüber möge z. B. eine Übertragung von Verbindungsherstellungsdaten von Datenübertragungsverbindungen unterbunden werden. Erreicht der Belastungsgrad z. B. 95 %, so möge auch eine Übertragung von Verbindungsherstellungsdaten von Fernsprechfernverbindungen unterbunden werden. Erreicht der Belastungsgrad z. B. 100 %, so würde auch eine Übertragung von Signalisierungszeichen für Alarmmeldungen unterbunden werden. Durch eine solche Unterbindung der Übertragung von Signalisierungszeichen wird natürlich die Belastung der Kanalsteuerung oder einzelner Signalkanäle gesenkt. Unterschreitet die tatsächliche Belastung wieder die angegebenen Belastungsgrenzen, so wird die Unterbindung der Übertragung der Signalisierungszeichen der jeweils betreffenden Art wieder aufgehoben. Dem Zeichengabenetz wird dadurch jeweils wieder mehr Belastung aufgebürdet.

Wie ausgeführt wurde, werden jedem der Zähler die Rückstellsignale in größeren zeitlichen Abständen gegeben als die Überlastsignale. Dadurch ist es möglich, den Belastungsgrad der Kanalsteuerung oder der mit ihr verbundenen Zeichenkanäle anhand der Dauer einer lückenlosen Abgabe von Überlastsignalen in den Schalteinrichtungen zu erfassen. Der Übertragungsbetrieb für Daten höherer Dringlichkeit kann länger fortgesetzt werden, weil Daten niedrigerer Dringlichkeit bereits bei Erreichen eines niedrigeren Belastungsgrades vorläufig nicht mehr übertragen werden.

Die Berücksichtigung der Belastung der Kanalsteuerung, also der zentralen Informationsverarbeitungseinrichtung gemäß der eingangs angegebenen Schaltungsanordnung, oder der mit ihr verbundenen Kanäle erfolgt also nach Maßgabe der Dauer einer lückenlosen Abgabe von Überlastsignalen. Dabei geht in die Dauer der Unterbrechung der Übertragung von Signalisierungszeichen einer bestimmten Dringlichkeitsstufe sowohl die Zeit ein, innerhalb der der betreffende Zähler weiter heraufgezählt wird, als auch die Zeit, innerhalb der nach einem Ausbleiben der Überlastsignale den Zähler wieder zurückgezählt wird.

Wie erläutert, erfolgt nach Unterbrechung der Übertragung von Signalisierungszeichen einer bestimmten Dringlichkeitsstufe zu einem ersten Zeitpunkt und nach einem Ausbleiben weiterer Überlastungssignale von einem zweiten Zeitpunkt an eine Fortsetzung den Übertragung der Signalisierungszeichen dieser Dringlichkeitsstufe von einem dritten Zeitpunkt an, dessen Zeitabstand vom zweiten Zeitpunkt sich aus der Anzahl der hierfür erforderlichen Rückzählimpulse für den Zähler ergibt. Da die verschiedenen Belastungsgrade, bei denen in den verschiedenen Schalteinrichtungen die jeweilige Übertragung von Signalisierungszeichen der verschiedenen Dringlichkeitsstufen unterbrochen wird, von Schalteinrichtung zu Schalteinrichtung die gleichen sind, ergibt es sich in einen Schaltungsanondnung der eingangs angegebenen Art zwangsläufig, daß nach einem Ausbleiben der Überlastsignale die Übertragung von Signalen jeweils einer bestimmten Dringlichkeitsstufe seitens der verschiedenen Schalteinrichtungen gleichzeitig wieder einsetzt. Dies kann zu einer Stoßbelastung, also einem sprunghaften Wiederanstieg der Belastung führen und diese zu einer erneuten Unterbrechung der Übertragung von Signalisierungszeichen der betreffenden Dringlichkeitsstufe. Da eine Unterbrechung einer Übertragung von Signalisierungszeichen einer bestimmten Dringlichkeitsstufe zu einer Ansammlung solcher Signalisierungszeichen in jeder der Schalteinrichtungen führt, kann der beschriebene Effekt dazu führen, daß sich die Vorgänge der Unterbrechung und der Wiederaufnahme der Übertragung den Signalisierungszeichen der betreffenden Dringlichkeitsstufe wiederholen, und zwar rythmisch im Sinne einer periodischen Schwingung.

Die Aufgabe der Erfindunng ist es, für den Wiederbeginn der Übertragung von Signalisierungszeichen jeweils einen bestimmten Dringlichkeitsstufe nach einer Unterbrechung der Übertragung von Signalisierungszeichen dieser Dringlichkeitsstufe mehr Kontinuität hinsichtlich des dadurch bedingten erneuten Belastungszuwachses zu gewährleisten, um ein mehrfaches Wiederaufnehmen und erneutes Unterbrechen der Übertragung von Signalisierungszeichen einer bestimmten Dringlichkeitsstufe zu vermeiden.

Die Erfindung löst de gestellte Aufgabe dadurch, daß die regelmäßig aufeinanderfolgenden Zeitintervalle pro Schalteinrichtung jeweils gleich groß, aber von Schalteinrichtung zu Schalteinrichtung unterschiedlich groß eingestellt werden, wodurch die Zähler der verschiedenen Schalteinrichtungen mit unterschiedlichen Geschwindigkeiten zurückgeschaltet werden.

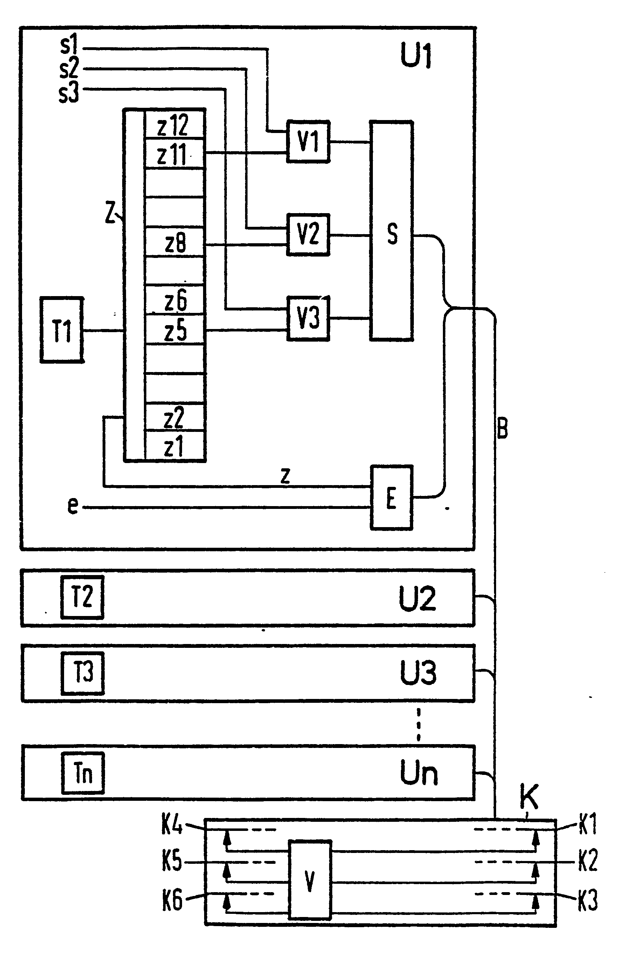

In der Zeichnung is ein Ausführungsbeispiel der Erfindung nur in wesentlich zu ihrem Verständnis beitragenden Bestandteilen dargestellt. Die Erfindung ist keineswegs auf dieses Ausführungsbeispiel beschränkt.

Wie die bereits genannte Literaturstelle nachweist, ist es bereits bekannt, zentrale Signalisierungskanäle zur Übertragung von Signalisierungszeichen vorzusehen. Je ein zentraler Zeichenkanal ist dabei jeweils einem Bündel von Nachrichtenkanälen zugeordnet. Über diese Nachrichtenkanäle können in allgemein bekannter Weise Verbindungen hergestellt werden. Die Nachrichtenkanäle dienen lediglich zur Übertragunng der Nachrichten selbst. Die zur Verbindungsherstellung, Verbindungsaufrechterhaltung, Verbindungsauslösung und zur Gebührenzählung pro Verbindung erforderlichen Schaltkennzeichen werden selbst nicht über die Nachrichtenkanäle übertragen, sondern über jeweils einen zentralen Zeichenkanal. Diese pro Verbindung erforderlichen Schaltkennzeichen werden mit Hilfe von Signalisierungszeichen über den zentralen Zeichenkanal jeweils für die betreffende Verbindung signalisiert. Außer den genannten Schaltkennzeichen zur Verbindungsherstellung, Verbindungsaufrechterhaltung, Verbindungsauflösung und zur Gebührenzählung kann es weitere Schaltkennnzeichen geben, die jeweils einer Verbindung individuell zugeordnet sind.

Es ist bereits auch schon vorgeschlagen worden, mehrere fernmeldetechnische Systeme parallel zu betreiben, z. B. ein Fernsprechvermittlungssystem, ein Fernschreibvermittlungssystem, ein Datenübertragungsvermittlungssystem usw., und bei getrennten Vermittlungsanlagen für die verschiedenen Systeme gemeinsame Bündel von Nachrichtenkanälen vorzusehen und zu verwenden, und jeweils einem Bündel von Kanälen, die örtlich gesehen in ein und derselben Richtung verlaufen, jeweils einem Signalkanal zuzuordnen. Ebenso ist es auch möglich, verschiedene Bündel von Nachrichtenkanälen vorzusehen, und zwar je ein Bündel pro System und den mehreren Kanalbündeln, die in ein und derselben Richtung verlaufen, jeweils einen gemeinsamen Signalkanal zuzuordnen.

So ist also einem Netz von Nachrichtenkanalbündeln ein Netz von Signalkanälen überlagert. An den Stellen, wo sich die Vermittlungsstellen der verschiedenen nachrichtentechnischen Systeme befinden, ist jeweils auch ein Knotenpunkt von in verschiedenen Richtungen verlaufenden Signalkanälen. An einem solchen Knotenpunkt befindet sich eine Kanalsteuerung, an die die in die verschiedenen Richtungen verlaufenden Signalkanäle angeschlossen sind. Eine solche Kanalsteuerung ist in der Zeichnung mit K bezeichnet. An sie sind die in die verschiedenen Richtungen verlaufenden Signalkanäle K1 bis K6 angeschlossen. Die Kanalsteuerung dient der Abwicklung der Übertragung von Signalisierungszeichen. Sie steuert die Aussendung solcher Signalisierungszeichen über die Signalkanäle K1 bis K6, ebenfalls aber auch den Empfang und die Weiterleitung von über diese Signalkanäle eintreffenden Signalisierungszeichen auf andere Signalkanäle. Die Übertragung dieser Signalisierungszeichen erfolgt in bekannter Weise im Zeitmultiplex.

Wie bereits ausgeführt wurde, befindet sich eine Kanalsteuerung jeweils am Knotenpunkt in dem Netz von Signalisierungskanälen. An diesem Knotenpunkt befinden sich außerdem Vermittlungsstellen den verschiedenen nachrichtentechnischen Systeme. Diesen Vermittlungsstellen den verschiedenen nachrichtentechnischen Systeme jeweils an einem Ort ist die Kanalsteuerung K gemeinsam zugeordnet. Diese steht über eine gemeinsame Busleitung B mit Datenköpfen U1 bis Un in Verbindung, wobei jeweils ein Datenkopf je einer Vermittlungsstelle jedes der verschiedenen nachrichtentechnischen Systeme zugeordnet ist. Der Datenkopf U1 möge z. B. einer Fernsprechvermittlungsstelle des ausgedehnten Fernsprechvermittlungsnetzes zugeordnet sein. Der Datenkopf U2 möge z. B. einer Fernschreibvermittlungsstelle eines ausgedehnten Fernschreibvermittlungsnetzes zugeordnet sein. Der Datenkopf U3 möge z. B. einer Datenübertragungsvermittlungsstelle eines ausgedehnten Datenübertragungsvermittlungsnetzes zugeordnet sein.

Die Datenköpfe U1 bis Un stehen mit der Kanalsteuerung K zum gegenseitigen Datenaustausch über die gemeinsame Busleitung B in Verbindung. Dieser Datenaustausch dient zur Übertragung von Informationen von den Datenköpfen zur Kanalsteuerung und zur Übertragung von Informationen in der umgekehrten Richtung. Informationen, insbesondere Steuerinformationen, die ein Datenkopf - auch als "teilzentrale Schalteinrichtung" bezeichnet, an die zugeordnete Kanalsteuerung überträgt, werden dann von dieser über den jeweils entsprechenden Signalisierungskanal, z. B. K1, weitergeleitet. Dies geschieht jeweils in Abhängigkeit davon, zu welcher Nachrichtenverbindung die jeweilige Information gehört; jede solche Information beinhaltet ein Signalisierungszeichen, das einer bestimmten Verbindung zugeordnet und damit einen bestimmten Nachrichtenkanal zugeordnet ist und demgemäß über den betreffenden Signalisierungskanal zu übertragen ist.

Wie bereits ausgeführt wurde, werden über die Signalisierungskanäle K1 bis K6 die den einzelnen Nachrichtenverbindungen entsprechenden Signalisierungszeichen im Zeitmultiplex übertragen.

Je nach Anfall von zu übertragenden Signalisierungszeichen pro Signalkanal ergibt sich eine momentane Belastung für den betreffenden Signalisierungskanal. Jeder der Signalkanäle hat eine maximale Belastbarkeit. Man kann dies auch als obere Grenze ihrer Verarbeitungskapazität bezeichnen. Ebenso hat auch die gemeinsame Kanalsteuerung K hinsichtlich ihrer Verarbeitungskapazität bezüglich aller an sie angeschlossener Kanäle eine obere Grenze. Wird durch den Anfall von zu übertragenden Signalisierungszeichen pro Kanal oder pro Kanalsteuerung die obere Grenze der Verarbeitungskapazität der einzelnen Kanäle oder der Kanalsteuerung überschritten, so kann es zu Zeichenverfälschungen, Blockierungen oder Störungen ähnlicher Art kommen. Um nun dies zu verhindern, ist es bekannt, daß Informationsverarbeitungseinrichtungen, wie die dargestellte Kanalsteuerung dann, wenn die Menge der laufend erhaltenen Informationen, also zu übertragender Signalisierungszeichen, eine obere Grenze der Verarbeitungskapazität der Kanalsteuerung erreicht oder übersteigt, in regelmäßigen Zeitabständen ein Überlastsignal zu den betreffenden Schalteinrichtungen, also den Datenköpfen U1 bis Un der Vermittlungsstellen aussendet, um diesen die Überlastsituation anzuzeigen.

Wann jeweils die obere Grenze der Verarbeitungskapazität einer Informationsverarbeitungseinrichtung erreicht ist, kann je nach Bedarf festgelegt werden. Diese obere Grenze der Verarbeitungskapazität kann so festgelegt werden, daß bis zu ihrem Erreichen alle angelieferten Signalisierungszeichen noch mit Sicherheit übertragen werden können. Diese obere Grenze kann jedoch auch so festgelegt werden, daß in einem geringen Prozentsatz bereits Verluste eintreten. Jedenfalls werden bei Erreichen oder Übersteigen der jeweils festgelegten oberen Grenze der Verarbeitungskapazität einer Kanalsteuerung in regelmäßigen Zeitabständen Überlastsignale zu den betreffenden Datenköpfen U1 bis Un ausgesendet.

Die Datenköpfe U1 bis Un mögen in wesentlichen Teilen gleich ausgebildet sein. In weiteren Einzelheiten ist der Datenkopf U1 dargestellt. Er weist u. a. einen Sender S und einen Empfänger E auf. Über den gemeinsamen Datenbus B von der Kanalsteuerung zum Empfänger E übertragene ankommende Signalisierungszeichen werden vom Empfänger E über einen Stromkreis e weitergeleitet. Sie können z. B. nach einer Zwischenspeicherung dem Zentralsteuerwerk einer Fernsprechvermittlungsstelle zugeleitet werden. Signalisierungszeichen, die über den Datenkopf U1 und die Kanalsteuerung K über einen der Signalisierungskanäle, z. B. K1, zur Aussendung zu bringen sind, mögen von dem genannten Zentralsteuerwerk über die Stromkreise s1, s2 oder s3 eintreffen. Sie gelangen über Vergleicher V1 bis V3 zu einem Sender S, der zur Weitergabe der Signalisierungszeichen über die Busleitung zur Kanalsteuerung K dient. Diese Stromkreise s1 bis s3 können auch mit verschiedenen Teilen eines Zentralsteuerwerks einer Fernsprechvermittlungsstelle verbunden sein. Z. B. kann einer dieser Stromkreise, z. B. s1, lediglich zur Übertragung von Alarmsignalen vorgesehen sein. Ein zweiter Stromkreis s2 kann zur Übertragung von Signalisierungszeichen vorgesehen sein, die zur Herstellung, Aufrechterhaltung und Auslösung von Fernsprechverbindungen dienen. Ein dritter Stromkreis s3 kann z. B. zur Übertragung von Zählerstandswerten von Gebührenimpulszählern vorgesehen sein, die einer Abrechnung von Fernsprechgebühren an zentraler Stelle dienen.

Im Datenkopf U1 ist u. a. auch ein Zähler Z vorgesehen. Dieser steht mit dem Empfänger E über einen Stromkreis z in Verbindung. Über diesen Stromkreis werden Überlastsignale, die der Empfänger E von der Kanalsteuerung K empfangen hat, zum Zähler Z weitergeleitet. Der Zähler Z summiert die empfangenen Überlastsignale auf. Er wird hierzu durch die Überlastsignale schrittweise weitergeschaltet. Die Überlastsignale folgen in regelmäßigen Zeitabständen aufeinander. In diesen Zeitabständen wird der Zähler schrittweise weitergeschaltet. In gegenüber den Zeitabständen der Überlastsignale größeren Zeitintervallen wird der Zähler jeweils schrittweise wieder zurückgeschaltet.

Es sei angenommen, daß die Überlastsignale in Zeitabständen von je einer Sekunde aufeinanderfolgen, solange die Überlastsituation in der betreffenden Kanalsteuerung besteht. Ferner sei angenommen, daß die Rückschaltebefehle für den Zähler Z, die von einem Impulsgeber T1 an jenen abgegeben werden, in Zeitintervallen von je zwei Sekunden aufeinanderfolgen. Sind nun aufeinanderfolgend z. B. 12 Überlastsignale eingetroffen, so sind hierbei 12 Sekunden vergangen. In dieser Zeit erhält der Zähler Z sechs jeweils in den Zeitintervallen von 2 Sekunden aufeinanderfolgende Rückschaltebefehle. Der Zähler Z umfaßt 12 Zählglieder z1 bis z12. Nach einem Eintreffen von 12 aufeinanderfolgenden Überlastsignalen erreicht sein Zählerstand also ein Zählglied Z6.

Treffen innerhalb von 24 Sekunden aufeinanderfolgend insgesamt 24 Überlastsignale nacheinander ein, so gelangt der Zähler mit seinem Zählerstand zum Zählglied Z12.

Bleiben dann die Überlastsignale wieder aus, so wird der Zähler innerhalb von weiteren 24 Sekunden wieder vollständig zurückgezählt.

Pro Schalteinrichtung ist individuell jeweils wenigstens ein Zählerstandswert gespeichert, bei dessen Erreichen oder Überschreiten die Abgabe von Informationen von der betreffenden Schalteinrichtung in dieser solange unterbunden ist, bis durch Zurückschalten des Zählers dessen Zählerstand den gespeicherten Zählerstandswert wieder unterschreitet oder erreicht. Diese Speicherung eines Zählerstandswertes im Datenkopf U1 besteht darin, daß z. B. das Zählglied z5 mit dem Vergleicher V3 verbunden ist. Erreicht nun der Zählerstand des Zählers Z das Schaltglied z5, so wird die Abgabe von Signalisierungszeichen über den Stromkreis s3 und den Sender S - oder deren originäre Generierung - solange unterbunden, bis durch Zurückschalten des Zählers der betreffende Zählerstanndswert wieder unterschritten wird. Es kann nun vorgesehen werden, daß der Vergleicher V3 die Weitergabe von Signalisierungszeichen über den Stromkreis s unterbindet, wenn der Zählerstandswert die Stellung des Schaltgliedes z5 erreicht, oder wenn er sie überschreitet. Entsprechendes gilt für den Vorgang des Zurückschaltens des Zählers.

Wie nun aus der Zeichnung leicht zu ersehen ist, werden die Vergleicher V1 bis V3 in Abhängigkeit von verschiedenen vom Zähler erreichten Zählerstandswerten für die Weitergabe von Signalisierungszeichen über ihre Stromkreise s1 bis s3 gesperrt. So kann vorgesehen werden, daß bei einem relativ niedrigen Belastungsgrad bereits eine Weitargabe von Gebührenzählimpulse signalisierenden Signalisierungszeichen unterbunden wird. Erst bei einem höheren Belastungsgrad (Zählerstandswert bei z8; Vergleicher V2 wird gesperrt) wird auch die Weitergabe solcher Signalisierungszeichen unterbunden, die zur Signalisierung von Schaltkennzeichen dienen, die einer Verbindungsherstellung, Verbindungsaufrechterhaltung und Verbindungsauslösung dienen. Bei einem noch höheren Belastungsgrad wird auch eine Weiterleitung solcher Signalisierungszeichen zur Kanalsteuerung K unterbunden, die einer Signalisierung von Alarmmeldungen dienen.

Erfindungsgemäß ist vorgesehen, daß die regelmäßig aufeinanderfolgenden Zeitintervalle pro Schalteinrichtung jeweils gleich groß aber von Schalteinrichtung zu Schalteinrichtung unterschiedlich groß einstellbar sind. Diese Zeitintervalle geben - wie bereits ausgeführt - jeweils den zeitlichen Abstand zwischen aufeinanderfolgenden Rückschaltebefehlen an, die von den Impulsgebern T1, T2 usw. jeweils an den Zähler in dem jeweiligen Datenkopf abgegeben werden. Diese Impulsgeber, z. B. T1, geben also Rückschaltebefehle regelmäßig in den aufeinanderfolgenden Zeitintervallen ab, solange der Zählerstandswert des betreffenden Zählers ungleich Null ist, solange der betreffende Zähler also einen Zählerstandswert aufweist, der einem seiner Zählglieder z1 bis z12 entspricht.

Erfindungsgemäß ist nun vorgesehen, daß die verschiedenen Impulsgeber T1 bis Tn auf verschieden große Zeitintervalle einstellbar sind. Dadurch wird der Zähler der verschiedenen Datenköpfe U1 bis Un mit unterschiedlichen Geschwindigkeiten zurückschaltbar.

Die über die Vergleicher V1 bis V3 zum Sender S übertragbaren Signalisierungszeichen weisen drei verschiedene Dringlichkeitsstufen auf. Die über den Vergleicher V3 zu übertragenden Signalisierungszeichen haben die geringste Dringlichkeit. Die über den Vergleicher V2 zu übertragenden Signalisierungszeichen weisen eine höhere Dringlichkeit auf. Die höchste Dringlichkeitsstufe haben Alarmmeldungen, während entsprechende Signalisierungszeichen über den Vergleicher V1 zu übertragen sind.

Ist nun durch ein Eintreffen von aufeinanderfolgenden Überlastsignalen mit Hilfe des Zählers Z in der beschriebenen Weise eine Aussendung von Signalisierungszeichen einer bestimmten Dringlichkeitsstufe unterbunden worden, ist also z. B. der Vergleicher V2 in seinen Sperrzustand gebracht worden, und sind noch weitere Überlastsignale eingetroffen, und bleiben dann von einem bestimmten Zeitpunkt an weitere Überlastsignale aus, so wird der Zähler Z in der beschriebenen Weise mit Hilfe der Rückschaltebefehle wieder zurückgeschaltet. Nach einer entsprechenden Anzahl von Zeitintervallen wird die Abgabe von Signalisierungszeichen der betreffenden Dringlichkeitsstufe wieder freigegeben. Durch die Erfindung wird nun erreicht, daß der Zeitpunkt dieser Freigabe bei den verschiedenen Datenköpfen zeitlich unterschiedlich ist. Dies wird dadurch bewirkt, daß die Zähler der verschiedenen Datenköpfe mit unterschiedlichen Geschwindigkeiten zurückschaltbar sind. War also bei sämtlichen Datenköpfen vorübergehend eine Abgabe von Signalisierungszeichen einer bestimmten Dringlichkeitsstufe an die Kanalsteuerung K aus Überlastungsgründen unterbunden, und sind von einem bestimmten Zeitpunkt an die von der Kanalsteuerung K an die Datenköpfe abgegebenen Überlastsignale ausgeblieben, so setzt die Abgabe von Signalisierungszeichen der betreffenden Dringlichkeitsstufe bei den verschiedenen Datenköpfen nicht gleichzeitig, sondern zeitlich gestaffelt ein. Dadurch wird verhindert, daß der gemeinsamen Kanalsteuerung K bei einem Absinken der Belastung plötzlich eine sehr hohe zusätzliche Belastung aufgebürdet wird. Eine solche Belastung würde sich aufgrund einer Gleichzeitigkeit in der beschriebenen Weise und aufgrund der Tatsache ergeben, daß bei einer vorübergehenden Unterbindung der Abgabe von Signalisierungszeichen einer bestimmten Dringlichkeitsstufe sich in jedem der Datenköpfe Signalisierungszeichen dieser Dringlichkeitsstufe aufsammeln würden und daß die Abgabe an die Kanalsteuerung K beginnend im gleichen Zeitpunkt seitens mehrerer Datenköpfe zu dem angesprochenen Problem der Stoßbelastung führen würde. Durch die Erfindung ist dieser Effekt jedoch vermieden.

Es sei auch noch darauf hingewiesen, daß die Übertragung der Signalisierungszeichen über die Busleitung B ebenfalls im Zeitmultiplex erfolgt. - Ferner sei auch noch ergänzt, daß die Aussendung und Zählung von Überlastsignalen anstatt pro Kanalsteuerung und gemeinsam für alle an sie angeschlossenen Signalkanäle auch pro Signalkanal erfolgen kann. In diesem Falle würde also die Überlastsituation einzeln für jeden Signalkanal erfaßt und geregelt werden. Hierzu ist die Kanalsteuerung K mit einer Belastungsmeßeinrichtung V ausgestattet, die für jeden der Signalisierungskanäle K1 - K6 einzeln jeweils die zurzeit bestehende Verkehrsbelastung abtastet. Nach Maßgabe hiervon gibt die Kanalsteuerung K Überlastsignale zu den Schalteinrichtungen U1 bis Un ab, entweder gemeinsam für alle Signalisierungskanäle oder einzeln für jeden von ihnen.

## Patentansprüche

1. Schaltungsanordnung für Fernmeldeanlagen, insbesondere Fernsprechvermittlungsanlagen, mit zentralen Informationsverarbeitungseinrichtungen (K) und ihnen zugeordneten teilzentralen Schalteinrichtungen (U1 - Un), die Informationen, insbesondere Steuerinformationen, an eine ihnen jeweils zugeordnete Informationsverarbeitungseinrichtung (K) abgeben, die dann, wenn die Menge der laufend erhaltenen Informationen eine obere Grenze ihrer Verarbeitungskapazität erreicht oder übersteigt, in regelmäßigen Zeitabständen ein Überlastsignal zu den betreffenden Schalteinrichtungen (U1 - Un) aussendet, in denen jeweils ein die empfangenen Überlastsignale aufsummierender und hierzu durch die Überlastsignale schrittweise weitergeschalteter und nach Verlauf von gegenüber den Zeitabständen größeren und ebenfalls regelmäßig aufeinander folgenden Zeitintervallen jeweils schrittweise zurückgeschalteter Zähler (Z) vorgesehen ist, und in denen pro Schalteinrichtung (U1 - Un) individuell jeweils wenigstens ein Zählerstandswert gespeichert ist, bei dessen Erreichen oder Überschreiten die Abgabe von Informationen von der betreffenden teilzentralen Schalteinrichtung (z. B. U1) in dieser solange unterbunden ist, bis durch Zurückschalten des Zählers (Z) dessen Zählerstand den gespeicherten Zählerstandswert wieder unterschreitet oder errecht, dadurch gekennzeichnet, daß die regelmäßig aufeinanderfolgenden Zeitintervalle pro Schalteinrichtung (U1 - Un) jeweils gleich groß aber von Schalteinrichtung zu Schalteinrichtung unterschiedlich groß eingestellt werden, wodurch die Zähler (Z) der verschiedenen Schalteinrichtungen (U1 - Un) mit unterschiedlichen Geschwindigkeiten zurückgeschaltet werden.

2. Schaltungsanordnung nach Anspruch 1, <u>dadurch gekennzeichnet,</u> daß die von den einer Informationsverarbeitungseinrichtung (K) zugeordneten Schalteinrichtungen (U1 - Un) an jene abgegebenen Informationen sich hinsichtlich der Dringlichkeit ihrer Verarbeitung unterscheiden, und daß nach Maßgabe der jeweiligen Dringlichkeit die Höhe des jeweils gespeicherten Zählerstandswertes festgelegt ist (Z).

3. Schaltungsanordnung nach Anspruch 2, <u>dadurch gekennzeichnet,</u> daß von einer Schalteinrichtung (U1 - Un) Informationen unterschiedlicher Dringlichkeiten abgegeben werden, und daß demgemäß mehrere Zählerstandswerte gespeichert sind (Z), und daß anhand von gemäß den Dringlichkeiten der verschiedenen zu übertragenden Informationen durchgeführten Vergleichen der jeweils betreffenden Zählerstandswerte mit den Ist-Zählerstandswert eine Informationsabgabe seitens der betreffenden Schalteinrichtung (z. B. U1) teils unterbunden ist und teils nicht.

4. Schaltungsanordnung nach Anspruch 1, <u>dadurch gekennzeichnet,</u> daß die Schalteinrichtungen (U1 - Un) Steuereinrichtungen und Vermittlungsstellen zugeordnet sind und die Informationsverarbeitungseinrichtungen (K) Steuereinrichtungen von Übertragungseinrichtungen an Netzknoten eines Netzes von Signalkanälen sind, die jeweils Gruppen von Nachrichtenübertragungskanälen zugeordnet sind.

**Claims**

1. A circuit arrangement for telecommunications systems, in particular telephone exchange systems with central information processing devices (K) and with sub-central switching devices (U1-Un) which are assigned to said central information processing devices and which emit items of information, in particular control information, to a respective, assigned information processing device (K) which, whenever the quantity of continuously received information items reaches or exceeds an upper limit of its processing capacity, transmits an overload signal at regular intervals of time to respective switching devices (U1-Un), each of which includes a counter (Z) which adds the received overload signals and for this purpose is advanced in stepped fashion by the overload signals and, on the expiration of time periods which exceed the aforementioned time intervals and likewise regularly follow one another, is driven backward in stepped fashion, and where at least one count value is stored individually in respect of each switching device (U1-Un), and when said current value is reached or exceeded the emission of information from the respective sub-central switching device (e. g. U1) is suppressed therein until, as a result of the stepping back of the counter (Z), its count again falls below or reaches the stored count value, <u>characterised in</u> that the time periods, which follow one another regularly are equal in length in respect of each switching device (U1-Un) but differ in length from switching device to switching device, as a result of which the counters (Z) of the various switching devices (U1-Un) are stepped backward at different speeds.

2. A circuit arrangement as claimed in claim 1, <u>characterised in</u> that the items of information which are emitted from the switching devices (U1-Un) assigned to an information processing device (K) to said information processing device differ in respect of their processing urgency, and that the magnitude of the respective stored count value (Z) is determined in accordance with the respective urgency.

3. A circuit arrangement as claimed in claim 2, <u>characterised in</u> that a switching device (U1-Un) emits items of information which differ in respect of their urgency, and that accordingly a plurality of count values are stored (Z) and that on the basis of comparisons, carried out in accordance with the urgency of the various information items which are to be transmitted, between the respective count values and the actual count value, the emission of information by the respective switching device (e. g. U1) is in part suppressed and is in part not suppressed.

4. A circuit arrangement as claimed in claim 1, <u>characterised in</u> that the switching devices (U1-Un) are assigned to control devices and exchanges and the information processing devices (K) are control devices of transmission devices at network nodes of a network of signal channels which are each assigned to groups of information transmission channels.

**Revendications**

1. Montage pour installations de télécommunications, notamment des installations de commutation téléphonique, comportant des dispositifs centraux (K) de traitement des informations et des dispositifs de commutation (U1-Un) partiellement centraux, qui leur sont associés et envoient des informations, notamment des informations de commande, à un dispositif (K) de traitement des informations, qui leur est respectivement associé et qui, lorsque la quantité des informations reçues de façon continue atteint ou dépasse une limite supérieure de sa capacité de traitement, envoie à des intervalles réguliers un signal de surcharge aux dispositifs de commutation (U1-Un) considérés, dans chacun desquels il est prévu un compteur (Z) qui additionne les signaux de surcharge reçus et à cet effet est avancé pas-à-pas par les signaux de surcharge et est rétrogradé respectivement pas-à-pas après l'écoulement de durées qui sont plus longues que les intervalles de temps et se succèdent également de façon régulière, et dans lesquels se trouve mémorisée individuellement, pour chacun de ces dispositifs de commutation (U1-Un), une valeur d'état de comptage, pour laquelle ou lors du dépassement de laquelle l'envoi d'informations par le dispositif de commutation partiellement central considéré (par exemple U1) est interrompu dans ce dispositif de commutation jusqu'à ce que, sous l'effet du comptage régressif du compteur (Z), l'état de comptage de ce dernier tombe à nouveau au-dessous ou atteigne l'état de comptage mémorisé, caractérisé par le fait que les durées, qui se succèdent régulièrement, pour chaque dispositif de commutation (U1-Un) sont réglées à des valeurs égales, mais différentes d'un dispositif de commutatiom à un autre, ce qui a pour effet que les compteurs (Z) des différents dispositifs de commutation (U1-Un) exécutent un comptage régressif à des vitesses différentes.

2. Montage suivant la revendication 1, caractérisé par le fait que les informations qui sont délivrées, par les dispositifs de commutation (U1-Un), associés d'un dispositif (K) de traitement des informations, se distinguent, du point de vue de l'urgence de leur traitement de celles délivrées à ceux-là, et que le niveau de la valeur de l'état de comptage respectivement mémorisée est déterminé (Z) en fonction de l'urgence respective.

3. Montage suivant la revendication 2, caractérisé par le fait qu'un dispositif de commutation (U1-Un) délivre des informations dont le degré d'urgence est différent, et que par conséquent plusieurs valeurs d'états de comptage sont mémorisées (Z), et que sur la base des comparaisons, exécutées en fonction des degrés d'urgence différents des différentes informations devant être transmises, des valeurs d'états de comptage respectivement considérées à la valeur réelle de l'état de comptage, une délivrance d'informations du côté du dispositif de commutation considéré (par exemple U1) est en partie supprimée et est en partie non supprimée.

4. Montage suivant la revendication 1, caractérisé par le fait que les dispositifs de commutation (U1-Un) sont associés à des dispositifs de commande et à des centraux et que les dispositifs (K) de traitement des informations sont des dispositifs de commande de dispositifs de transmission, situés au niveau de noeuds d'un réseau de canaux de transmission de signaux, qui sont associés respectivement à des groupes de canaux de transmission de signaux d'informations.